# FASCICULE DE BREVET EUROPEEN

(11) **EP 3 529 319 B1**
(45) Date de publication et mention de la délivrance du brevet: **30.07.2025**
(21) Numéro de dépôt: 17794392.5
(22) Date de dépôt: 20.10.2017
(51) Int. Cl.: C09D 7/00, C08G 18/71, C08G 18/79, C08G 18/10, C08G 18/48, C08G 18/28

(54) **COMPOSÉ URÉTHANE MODIFICATEUR DE RHÉOLOGIE**
RHEOLOGIEMODIFIZIERENDE URETHANVERBINDUNG
RHEOLOGY-MODIFYING URETHANE COMPOUND

(30) Priorité: 20.10.2016 FR 1660180
(43) Date de publication de la demande: 28.08.2019
(73) Titulaire: Coatex, 69730 Genay (FR)
(72) Inventeur: MATTER, Yves, 69650 Quincieux (FR); RUHLMANN, Denis, 69730 Genay (FR); SUAU, Jean-Marc, 69480 Lucenay (FR)
(74) Mandataire: Balmefrezol, Ludovic Francis Pierre
(86) Numéro de dépôt international: PCT/FR2017/052884
(87) Numéro de publication internationale: WO 2018/073545

(56) Documents cités:
- EP-A1- 2 444 432
- FR-A1- 2 894 980
- US-A- 4 180 491

## Description

L'invention concerne un composé modificateur de rhéologie. Le composé à fonctions uréthanes de l'invention peut être préparé selon un procédé en plusieurs étapes qui mettent en œuvre des composés à fonctions isocyanates différents. Pour la préparation du composé uréthane selon l'invention, un composé monoisocyanate, notamment un composé monoisocyanate issu de la condensation séparée d'un composé diisocyanate dissymétrique avec un composé réactif, est mis à réagir avec un composé alkylène-glycol en présence d'un composé polyisocyanate. L'invention fournit également des compositions de revêtement comprenant des particules minérales et un composé uréthane selon l'invention.

De manière générale pour les compositions aqueuses de revêtement, et en particulier pour les compositions aqueuses de peinture ou de vernis, il est nécessaire de contrôler la viscosité tant pour de faibles ou moyens gradients de cisaillement que pour des gradients de cisaillement élevés. En effet, au cours de sa préparation, de son stockage, de son application ou de son séchage, une formulation de peinture subit de nombreuses contraintes nécessitant des propriétés rhéologiques particulièrement complexes.

Lors du stockage de la peinture, les particules de pigment tendent à sédimenter par gravité. Stabiliser la dispersion de ces particules de pigment nécessite alors de disposer d'une formulation de peinture dont la viscosité est élevée à de très faibles gradients de cisaillement correspondant à la vitesse limite des particules.

La prise de peinture est la quantité de peinture emportée au moyen d'un outil d'application, un pinceau, une brosse ou un rouleau par exemple. L'outil plongé puis retiré du pot de peinture emportant une quantité élevée de peinture évitera de devoir être retrempé plus fréquemment. La prise de peinture est fonction croissante de la viscosité. Le calcul du gradient de cisaillement équivalent est fonction de la vitesse d'écoulement de la peinture pour une épaisseur particulière de peinture sur l'outil. La formulation de peinture devrait donc également avoir une viscosité élevée à des gradients de cisaillement faibles ou moyens.

De plus, un pouvoir garnissant élevé de la peinture doit être recherché afin que lors de son application sur un subjectile, une quantité importante de peinture soit déposée lors de chaque passage. Un pouvoir garnissant élevé permet alors d'obtenir un feuil humide plus important lors de chaque passage de l'outil. Une viscosité élevée de la formulation de peinture doit donc être recherchée à des gradients de cisaillement élevés.

Une viscosité élevée à des gradients de cisaillement élevés permettra également de réduire ou d'éliminer le risque de formation d'éclaboussures ou de gouttelettes lors de l'application de la peinture.

Une viscosité réduite à de faibles ou moyens gradients de cisaillement permettra également d'obtenir un bon aspect tendu après application de la peinture, notamment d'une peinture monocouche, sur un subjectile dont la surface revêtue présentera alors un aspect très régulier, sans bosses ni creux. L'aspect visuel final du feuil sec est alors bien meilleur.

De plus, après son dépôt sur une surface, notamment une surface verticale, la peinture ne devrait pas former de coulure. Il est alors nécessaire que la formulation de peinture possède une viscosité élevée à de faibles et moyens gradients de cisaillement.

Enfin, après son dépôt sur une surface, la peinture devrait posséder une capacité de nivellement importante. Une viscosité réduite à de faibles et moyens gradients de cisaillement de la formulation de peinture est alors requise.

Des composés de type HEUR (*hydrophobically modified ethoxylated urethanes* ou uréthanes éthoxylés et modifiés de manière hydrophobe) sont connus comme agents modificateurs de rhéologie.

Le document US 4,180,491 décrit la préparation de différents composés polyuréthanes. Lors de la préparation de ces composés, une première étape consiste à faire réagir un polyéthylèneglycol (PEG) avec un monoisocyanate, jusqu'à consommation complète des fonctions isocyanates du monoisocyanate. Puis, lors d'une deuxième étape, le condensat PEG-monoisocyanate, produit lors de la première étape, est mis à réagir avec un composé triisocyanate.

Les documents EP 2444432 et FR 2894980 décrivent des composés uréthanes ainsi que leur utilisation.

Toutefois, les composés de type HEUR connus ne permettent pas toujours d'apporter de solution satisfaisante. Notamment, les composés modificateurs de rhéologie de l'état de la technique ne permettent pas d'améliorer de manière satisfaisante le compromis entre viscosité Stormer (mesurée à faible ou moyen gradients de cisaillement et exprimée en unité KU) et viscosité ICI (mesurée à haut ou très haut gradients de cisaillement et exprimée en s⁻¹). En particulier, les composés modificateurs de rhéologie connus ne permettent pas toujours d'augmenter le rapport viscosité ICI/viscosité Stormer.

Il existe donc un besoin de disposer d'agents modificateurs de rhéologie améliorés.

Le composé uréthane selon l'invention permet d'apporter une solution à tout ou partie des problèmes des agents modificateurs de rhéologie de l'état de la technique.

Ainsi, l'invention fournit un composé uréthane préparé en l'absence de tout composé diisocyanate, par réaction :
(A) d'au moins un composé monoisocyanate choisi parmi :
   (A1) un composé comprenant une unique fonction isocyanate et
   (A2) au moins un composé monoisocyanate issu de la réaction séparée
      (A2-1) d'au moins un composé comprenant au moins un atome d'hydrogène labile et
      (A2-2) d'au moins un composé diisocyanate dissymétrique,
(B) d'au moins un composé isocyanate comprenant plus de 2 fonctions isocyanates, et
(C) d'au moins un composé de formule (I) :

   (HO)-Lₙ-(OH) (I)
dans laquelle L représente indépendamment un résidu poly(alkylèneglycol) et n représente un nombre allant de 40 à 400,
le composé monoisocyanate étant mis à réagir avec le composé alkylène-glycol en présence du composé polyisocyanate.

De manière préférée selon l'invention, la condensation des composés (A), (B) et (C) est conduite en présence d'un catalyseur. Ce catalyseur peut être choisi parmi acide acétique, une amine, de préférence de 1,8-diazabicyclo[5.4.0]undec-7-ene (DBU), un dérivé d'un métal choisi parmi Al, Bi, Sn, Hg, Pb, Mn, Zn, Zr, Ti. Des traces d'eau peuvent également participer à la catalyse de la réaction. Comme exemples de dérivés métalliques, on préfère un dérivé choisi parmi dilaurate de dibutyl bismuth, diacétate de dibutyl bismuth, oxyde de dibutyl bismuth, carboxylate de bismuth, dilaurate de dibutyl étain, diacétate de dibutyl étain, oxyde de dibutyl étain, un dérivé du mercure, un dérivé du plomb, des sels de zinc, des sels de manganèse, un composé comprenant du zirconium chélaté, un composé comprenant de l'aluminium chélaté. Le dérivé métallique préféré est choisi parmi un dérivé de Bi et un dérivé de Sn.

De manière avantageuse, le composé uréthane selon l'invention est un composé possédant un caractère hydrophile. Il peut être formulé en milieu aqueux.

Selon l'invention, les composés monoisocyanates (A1) et (A2) ne comprennent qu'une seule fonction isocyanate. Il s'agit de réactifs connus en tant que tels ou bien préparés pour les besoins de l'invention. Ainsi, les composés (A1) et (A2) ne comprennent qu'une seule fonction isocyanate réactive lors de la réaction avec les composés (B) et (C). La réaction de ces composés monoisocyanates (A1) et (A2) avec les composés (B) et (C) est donc bien réalisée en l'absence de composé diisocyanate.

De manière préférée selon l'invention, le composé monoisocyanate (A1) est un composé de formule (II) :

R-NCO (II)

dans laquelle R représente un groupement hydrocarboné linéaire, ramifié ou cyclique, saturé, insaturé ou aromatique, de préférence un groupement alkyl linéaire, ramifié ou cyclique comprenant de 6 à 20 atomes de carbone ou un groupement alcényle linéaire, ramifié ou cyclique comprenant de 6 à 20 atomes de carbone.

De manière également préférée selon l'invention, le composé monoisocyanate (A1) est un composé choisi parmi :
- les composés monoisocyanates aromatiques, notamment phenyl isocyanate, diphenylmethane monoisocyanate, 2-phenylethyl isocyanate, 4-tolyl isocyanate, 2-tolyl isocyanate, 2,5-dimethylphenyl isocyanate, 3,4-dimethylphenyl isocyanate, 2,3-dimethylphenyl isocyanate, 4-isocyanato-4'-methyldiphenylmethane ;
- les composés monoisocyanates aromatiques polyfonctionnels, notamment 2-methoxy-4-nitrophenyl isocyanate, polymethylene polyphenyl isocyanate ;
- les composés alkyl-monoisocyanates, notamment hexyl-isocyanate, heptyl-isocyanate, octyl-isocyanate, n-nonyl-isocyanate, decyl-isocyanate, undecyl-isocyanate, dodecyl-isocyanate, tridecyl-isocyanate, tetradecyl-isocyanate, cetyl-isocyanate, 2-ethyl-hexyl-isocyanate, n-octyl-isocyanate, isononyl-isocyanate, stearyl-isocyanate ;
- les composés cycloalkyl-monoisocyanates, notamment cyclohexyl-isocyanate, 1-isocyanatomethyl-1,3,3-trimethylcyclohexane.

Les composés monoisocyanates (A1) préférés sont 2-ethyl-hexanol-isocyanate, hexyl-isocyanate, heptyl-isocyanate, octyl-isocyanate, n-nonyl-isocyanate, 2-ethyl-hexyl-isocyanate, n-octyl-isocyanate, isononyl-isocyanate.

Selon l'invention, le composé (A2) est issu de la réaction préalable et séparée d'au moins un composé (A2-1) et d'au moins un composé (A2-2).

De manière avantageuse selon l'invention, le composé uréthane selon l'invention est préparé par la mise en œuvre d'une quantité molaire de composé (A2-1) qui est supérieure ou égale à la quantité molaire de composé (A2-2). De préférence, la quantité molaire de fonctions comprenant au moins un atome d'hydrogène labile, en particulier la quantité molaire de groupes hydroxyles, du composé (A2-1) est supérieure ou égale à la quantité molaire de fonctions isocyanates du composé (A2-2).

Ainsi, le composé diisocyanate (A2-2) est totalement transformé ou totalement consommé lors de la réaction de préparation du composé monoisocyanate (A2). Il n'est pas présent et n'intervient donc pas en tant que tel lors de la réaction qui met en œuvre les composés (B) et (C).

Par ailleurs et de manière essentielle selon l'invention, le caractère dissymétrique du composé diisocyanate (A2-2) conduit à une réactivité différente des deux fonctions isocyanates qu'il comprend. En effet, de manière générale, les cinétiques de réaction des deux fonctions isocyanates sont différentes. Ainsi, le composé uréthane selon l'invention est fonctionnalisé de manière contrôlée.

Comme autre composé monoisocyanate, la réaction de condensation selon l'invention peut donc également mettre en œuvre un composé monoisocyanate (A2). Selon l'invention, le composé (A2) est préparé lors d'une réaction séparée de la réaction de condensation selon l'invention. Le composé monoisocyanate (A2) est donc issu de la réaction :
- (A2-1) d'au moins un composé comprenant au moins un atome d'hydrogène labile et
- (A2-2) d'au moins un composé diisocyanate dissymétrique.

De manière préférée selon l'invention, la réaction de préparation du composé (A2) est une réaction catalysée.

De manière plus préférée selon l'invention, la réaction est catalysée au moyen d'acide acétique, d'une amine, de préférence de 1,8-diazabicyclo[5.4.0]undec-7-ene (DBU) ou d'au moins un dérivé d'un métal choisi parmi Al, Bi, Sn, Hg, Pb, Mn, Zn, Zr, Ti. Des traces d'eau peuvent également participer à la catalyse de la réaction.

Comme exemples de dérivés métalliques, on préfère un dérivé choisi parmi dilaurate de dibutyl bismuth, diacétate de dibutyl bismuth, oxyde de dibutyl bismuth, carboxylate de bismuth, dilaurate de dibutyl étain, diacétate de dibutyl étain, oxyde de dibutyl étain, un dérivé du mercure, un dérivé du plomb, des sels de zinc, des sels de manganèse, un composé comprenant du zirconium chélaté, un composé comprenant de l'aluminium chélaté. Le dérivé métallique préféré est choisi parmi un dérivé de Bi et un dérivé de Sn.

Selon l'invention, le composé monoisocyanate (A2) est donc préparé par condensation préalable d'au moins un composé (A2-1) et d'au moins un composé (A2-2). Une fois la réaction de condensation réalisée, le composé monoisocyanate (A2) ne possède qu'une seule fonction isocyanate réactive résiduelle.

Le composé (A2-1) est préférentiellement un composé comprenant au moins un atome d'hydrogène labile et réactif avec le composé diisocyanate dissymétrique. Plus préférentiellement, il s'agit d'un composé (A2-1) comprenant au moins un groupement hydroxyle. De manière particulièrement préférée, le composé (A2-1) est un monoalcool, par exemple un monoalcool linéaire, ramifié ou cyclique en C₅-C₁₄, en particulier un monoalcool linéaire ou ramifié en C₆-C₁₄, notamment un monoalcool linéaire, ramifié ou cyclique en C₈-C₁₂.

Comme autres composés (A2-1) selon l'invention, on peut utiliser un composé comprenant une fonction amine primaire ou une fonction amine secondaire ; un acide carboxylique ; un composé mercaptan.

Le composé (A2-2) est préférentiellement un composé choisi parmi les composés diisocyanates aromatiques dissymétriques et les composés diisocyanates alicycliques dissymétriques. Comme exemples préférés de composés (A2-2), on peut utiliser un composé choisi parmi 2,4'-diisocyanate de diphénylméthylène (2,4'-MDI), 2,4'-dibenzyl diisocyanate (2,4'-DBDI), 2,4-diisocyanate de toluène (2,4-TDI) et diisocyanate d'isophorone (IPDI).

Outre le composé monoisocyanate (A), la réaction de condensation met également en œuvre un composé (B) qui comprend plus de 2 fonctions isocyanates. De manière préférée, le composé (B) est un composé isocyanate comprenant 3, 4, 5 ou 6 fonctions isocyanates. Plus préférentiellement, il comprend 3 fonctions isocyanates.

Selon l'invention, le composé (B) peut également être choisi parmi les composés isocyanates comprenant plus de 2,5 fonctions isocyanates, de préférence plus de 2,6 fonctions isocyanates, plus préférentiellement plus de 2,7 fonctions isocyanates, encore plus préférentiellement 3 ou plus de 3 fonctions isocyanates.

Comme exemples de composés (B) préférés selon l'invention, on utilise :
- le triphenylmethane-4,4',4"-triisocyanate ou le 1,1',1"-methylidynetris (4-isocyanatobenzene) ; ou
- un composé isocyanurate, notamment un composé isocyanurate d'un composé choisi parmi :
   ∘ les composés diisocyanates aromatiques symétriques, de préférence :
      ▪ 2,2'-diisocyanate de diphénylméthylène (2,2'-MDI) et 4,4'-diisocyanate de diphénylméthylène (4,4'-MDI) ;
      ▪ 4,4'-dibenzyl diisocyanate (4,4'-DBDI) ;
      ▪ 2,6-diisocyanate de toluène (2,6-TDI) ;
      ▪ m-xylylène diisocyanate (m-XDI) ;
   ∘ les composés diisocyanates alicycliques symétriques, de préférence méthylène bis(4-cyclohexylisocyanate) (H₁₂MDI) ;
   ∘ les composés diisocyanates aliphatiques symétriques, de préférence diisocyanate d'hexaméthylène (HDI), diisocyanate de pentaméthylène (PDI) ;
   ∘les composés diisocyanates aromatiques dissymétriques, de préférence :
      ▪ 2,4'-diisocyanate de diphénylméthylène (2,4'-MDI) ;
      ▪ 2,4'-dibenzyl diisocyanate (2,4'-DBDI) ;
      ▪ 2,4-diisocyanate de toluène (2,4-TDI) ;
- un composé trimère de biurée, notamment un composé trimère de biurée d'un composé choisi parmi :
   ∘ les composés diisocyanates aromatiques symétriques, de préférence :
      ▪ 2,2'-diisocyanate de diphénylméthylène (2,2'-MDI) et 4,4'-diisocyanate de diphénylméthylène (4,4'-MDI) ;
      ▪ 4,4'-dibenzyl diisocyanate (4,4'-DBDI) ;
      ▪ 2,6-diisocyanate de toluène (2,6-TDI) ;
      ▪ m-xylylène diisocyanate (m-XDI) ;
   ∘les composés diisocyanates alicycliques symétriques, de préférence méthylène bis(4-cyclohexylisocyanate) (H₁₂MDI) ;
   ∘ les composés diisocyanates aliphatiques symétriques, de préférence diisocyanate d'hexaméthylène (HDI), diisocyanate de pentaméthylène (PDI) ;
   o les composés diisocyanates aromatiques dissymétriques, de préférence :
      ▪ 2,4'-diisocyanate de diphénylméthylène (2,4'-MDI) ;
      ▪ 2,4'-dibenzyl diisocyanate (2,4'-DBDI) ;
      ▪ 2,4-diisocyanate de toluène (2,4-TDI) ;
- les composés diisocyanates alicycliques dissymétriques, de préférence diisocyanate d'isophorone (IPDI).

Selon l'invention, le composé (B) est préférentiellement choisi parmi triphenylmethane-4,4',4"-triisocyanate, 1,1',1"-methylidynetris (4-isocyanatobenzene), un isocyanurate de HDI, un isocyanurate d'IPDI, un isocyanurate de PDI, un trimère de biurée de HDI et un trimère de biurée d'IPDI, un trimère de biurée de PDI.

Outre les composés (A) et (B), la réaction de condensation met également en œuvre un composé (C) de formule (I).

De manière préférée, le composé (C) est un composé de formule (I) dans laquelle :
- L représente indépendamment un résidu poly(éthylèneglycol) ; ou
- n représente un nombre allant de 50 à 400 ; ou
- L représente indépendamment un résidu poly(éthylèneglycol) et n représente un nombre allant de 50 à 400.

De manière plus préférée, le composé (C) est un composé de formule (I) dans laquelle :
- L représente indépendamment un résidu poly(éthylèneglycol) ; ou
- n représente un nombre allant de 100 à 300 ; ou
- L représente indépendamment un résidu poly(éthylèneglycol) et n représente un nombre allant de 100 à 300.

De manière également préférée, le composé (C) est un composé dont la masse molaire (M_{W}) va de 1 500 à 20 000 g/mol, de préférence de 2 000 à 20 000 g/mol, plus préférentiellement de 4 000 à 15 000 g/mol. Selon l'invention, la masse molaire est calculée à partir de l'indice d'hydroxyle déterminé selon la norme DIN 53240-1, désormais norme DIN EN ISO 4629-1, en appliquant la formule : (56 100 x fonctionnalité en groupements OH) / indice d'hydroxyle.

Lors de la réaction de condensation permettant de préparer le composé uréthane selon l'invention, les quantités de composés (A), (B) et (C) peuvent varier. De manière préférée, la quantité molaire de composé (C) est environ deux fois moindre que la quantité molaire de composé monoisocyanate (A).

Outre un composé uréthane, l'invention concerne également un procédé de préparation de ce composé. Ainsi, l'invention fournit un procédé de préparation d'un composé uréthane en l'absence de tout composé diisocyanate, par réaction :
(A) d'au moins un composé monoisocyanate choisi parmi :
   (A1) un composé comprenant une unique fonction isocyanate et
   (A2) au moins un composé monoisocyanate issu de la réaction séparée
      (A2-1) d'au moins un composé comprenant au moins un atome d'hydrogène labile et
      (A2-2) d'au moins un composé diisocyanate dissymétrique,
(B) d'au moins un composé isocyanate comprenant plus de 2 fonctions isocyanates, et
(C) d'au moins un composé de formule (I) :

   (HO)-Lₙ-(OH) (I)

   dans laquelle L représente indépendamment un résidu poly(alkylèneglycol) et n représente un nombre allant de 40 à 400,
le composé monoisocyanate étant mis à réagir avec le composé alkylène-glycol en présence du composé polyisocyanate.

De manière préférée selon l'invention pour le procédé selon l'invention, la condensation des composés (A), (B) et (C) est conduite en présence d'un catalyseur. Ce catalyseur peut être choisi parmi l'acide acétique, une amine, de préférence 1,8-diazabicyclo[5.4.0]undec-7-ene (DBU), un dérivé d'un métal choisi parmi Al, Bi, Sn, Hg, Pb, Mn, Zn, Zr, Ti, de préférence choisi parmi dilaurate de dibutyl bismuth, diacétate de dibutyl bismuth, oxyde de dibutyl bismuth, carboxylate de bismuth, dilaurate de dibutyl étain, diacétate de dibutyl étain, oxyde de dibutyl étain, un dérivé du mercure, un dérivé du plomb, des sels de zinc, des sels de manganèse, un composé comprenant du zirconium chélaté, un composé comprenant de l'aluminium chélaté. Le dérivé métallique préféré est choisi parmi un dérivé de Bi et un dérivé de Sn.

Pour le procédé selon l'invention, les composés monoisocyanates (A1) et (A2) ne comprennent qu'une seule fonction isocyanate. La réaction de ces composés avec les composés (B) et (C) est donc bien réalisée en l'absence de composé diisocyanate.

De manière préférée pour le procédé selon l'invention, le composé monoisocyanate (A1) est un composé de formule (II) :

R-NCO (II)

dans laquelle R représente un groupement hydrocarboné linéaire, ramifié ou cyclique, saturé, insaturé ou aromatique, de préférence un groupement alkyl linéaire, ramifié ou cyclique comprenant de 6 à 20 atomes de carbone ou un groupement alcényle linéaire, ramifié ou cyclique comprenant de 6 à 20 atomes de carbone.

De manière également préférée pour le procédé selon l'invention, le composé monoisocyanate (A1) est un composé choisi parmi :
- les composés monoisocyanates aromatiques, notamment phenyl isocyanate, diphenylmethane monoisocyanate, 2-phenylethyl isocyanate, 4-tolyl isocyanate, 2-tolyl isocyanate, 2,5-dimethylphenyl isocyanate, 3,4-dimethylphenyl isocyanate, 2,3-dimethylphenyl isocyanate, 4-isocyanato-4'-methyldiphenylmethane ;
- les composés monoisocyanates aromatiques polyfonctionnels, notamment 2-methoxy-4-nitrophenyl isocyanate, polymethylene polyphenyl isocyanate,
- les composés alkyl-monoisocyanates, notamment hexyl-isocyanate, heptyl-isocyanate, octyl-isocyanate, n-nonyl-isocyanate, decyl-isocyanate, undecyl-isocyanate, dodecyl-isocyanate, tridecyl-isocyanate, tetradecyl-isocyanate, cetyl-isocyanate, 2-ethyl-hexyl-isocyanate, n-octyl-isocyanate, isononyl-isocyanate, stearyl-isocyanate ;
- les composés cycloalkyl-monoisocyanates, notamment cyclohexyl-isocyanate, 1-isocyanatomethyl-1,3,3-trimethylcyclohexane.

Les composés (A1) préférés sont 2-ethyl-hexanol-isocyanate, hexyl-isocyanate, heptyl-isocyanate, octyl-isocyanate, n-nonyl-isocyanate, 2-ethyl-hexyl-isocyanate, n-octyl-isocyanate, isononyl-isocyanate.

Pour le procédé selon l'invention, le composé monoisocyanate (A2) est donc préparé par condensation séparée et préalable d'au moins un composé (A2-1) et d'au moins un composé (A2-2).

De manière avantageuse pour le procédé selon l'invention, le composé (A2-1) est mis en œuvre en une quantité molaire qui est supérieure ou égale à la quantité molaire de composé (A2-2). De préférence pour le procédé selon l'invention, la quantité molaire de fonctions comprenant au moins un atome d'hydrogène labile, en particulier la quantité molaire de groupes hydroxyles, du composé (A2-1) est supérieure ou égale à la quantité molaire de fonctions isocyanates du composé (A2-2). Ainsi, le composé diisocyanate (A2-2) est totalement transformé lors de la réaction de préparation du composé (A2). Il n'est pas présent en tant que composé diisocyanate du fait qu'une de ses fonctions isocyanates a réagi avec le composé (A2-1). Il n'intervient donc pas lors de la réaction qui met en œuvre les composés (B) et (C).

Par ailleurs et de manière essentielle pour le procédé selon l'invention, le caractère dissymétrique du composé diisocyanate (A2-2) conduit à une réactivité différente des deux fonctions isocyanates qu'il comprend. En effet, de manière générale, les cinétiques de réaction des deux fonctions isocyanates sont différentes. Ainsi, le procédé selon l'invention permet de contrôler la fonctionnalité du composé uréthane préparé.

Comme autre composé monoisocyanate, le procédé selon l'invention peut également mettre en œuvre un composé monoisocyanate (A2). Pour le procédé selon l'invention, le composé (A2) est préparé lors d'une réaction séparée de la réaction de condensation selon l'invention. Le composé monoisocyanate (A2) est donc issu de la réaction :
- (A2-1) d'au moins un composé comprenant au moins un atome d'hydrogène labile et
- (A2-2) d'au moins un composé diisocyanate dissymétrique.

De manière préférée pour le procédé selon l'invention, la réaction de préparation du composé monoisocyanate (A2) est une réaction catalysée.

De manière plus préférée pour le procédé selon l'invention, la réaction est catalysée au moyen d'acide acétique, d'une amine, de préférence au moyen de 1,8-diazabicyclo[5.4.0]undec-7-ene (DBU), ou d'au moins un dérivé d'un métal choisi parmi Al, Bi, Sn, Hg, Pb, Mn, Zn, Zr, Ti. Des traces d'eau peuvent également participer à la catalyse de la réaction.

Comme exemples de dérivés métalliques, on préfère un dérivé choisi parmi le dilaurate de dibutyl bismuth, diacétate de dibutyl bismuth, oxyde de dibutyl bismuth, carboxylate de bismuth, dilaurate de dibutyl étain, diacétate de dibutyl étain, oxyde de dibutyl étain, un dérivé du mercure, un dérivé du plomb, des sels de zinc, des sels de manganèse, un composé comprenant du zirconium chélaté, un composé comprenant de l'aluminium chélaté. Le dérivé métallique préféré est choisi parmi un dérivé de Bi et un dérivé de Sn.

Pour le procédé selon l'invention, le composé monoisocyanate (A2) est donc préparé par condensation préalable d'au moins un composé (A2-1) et d'au moins un composé (A2-2).

Le composé (A2-1) est préférentiellement un composé comprenant au moins un atome d'hydrogène labile et réactif avec le composé diisocyanate dissymétrique. Plus préférentiellement, il s'agit d'un composé (A2-1) comprenant au moins un groupement hydroxyle. De manière particulièrement préférée, le composé (A2-1) est un monoalcool, par exemple un monoalcool linéaire, ramifié ou cyclique en C₅-C₁₄, en particulier un monoalcool linéaire, ramifié ou cyclique en C₆-C₁₄, notamment un monoalcool linéaire, ramifié ou cyclique en C₈-C₁₂. Comme autres composés (A2-1) selon l'invention, on peut utiliser un composé comprenant une fonction amine primaire ou une fonction amine secondaire ; un acide carboxylique ; un composé mercaptan.

Le composé (A2-2) est préférentiellement un composé choisi parmi les composés diisocyanates aromatiques dissymétriques et les composés diisocyanates alicycliques dissymétriques. Comme exemples préférés de composés (A2-2), on peut utiliser un composé choisi parmi 2,4'-diisocyanate de diphénylméthylène (2,4'-MDI), 2,4'-dibenzyl diisocyanate (2,4'-DBDI), 2,4-diisocyanate de toluène (2,4-TDI) et diisocyanate d'isophorone (IPDI).

Outre le composé monoisocyanate (A), le procédé selon l'invention met également en œuvre un composé (B) qui comprend plus de 2 fonctions isocyanates. De manière préférée pour le procédé selon l'invention, le composé (B) est un composé isocyanate comprenant 3, 4, 5 ou 6 fonctions isocyanates. Plus préférentiellement, il comprend 3 fonctions isocyanates.

Pour le procédé selon l'invention, le composé (B) peut également être choisi parmi les composés isocyanates comprenant plus de 2,5 fonctions isocyanates, de préférence plus de 2,6 fonctions isocyanates, plus préférentiellement plus de 2,7 fonctions isocyanates, encore plus préférentiellement 3 ou plus de 3 fonctions isocyanates. Comme exemples de composés (B) préférés selon le procédé de l'invention, on utilise :
- le triphenylmethane-4,4',4"-triisocyanate ou le 1,1',1"-methylidynetris (4-isocyanatobenzene) ; ou
- un composé isocyanurate, notamment un composé isocyanurate d'un composé choisi parmi :
   ∘les composés diisocyanates aromatiques symétriques, de préférence :
      ▪ 2,2'-diisocyanate de diphénylméthylène (2,2'-MDI) et 4,4'-diisocyanate de diphénylméthylène (4,4'-MDI) ;
      ▪ 4,4'-dibenzyl diisocyanate (4,4'-DBDI) ;
      ▪ 2,6-diisocyanate de toluène (2,6-TDI) ;
      ▪ m-xylylène diisocyanate (m-XDI) ;
   ∘ les composés diisocyanates alicycliques symétriques, de préférence méthylène bis(4-cyclohexylisocyanate) (H₁₂MDI) ;
   ∘ les composés diisocyanates aliphatiques symétriques, de préférence diisocyanate d'hexaméthylène (HDI) ;
   o les composés diisocyanates aromatiques dissymétriques, de préférence :
      ▪ 2,4'-diisocyanate de diphénylméthylène (2,4'-MDI) ;
      ▪ 2,4'-dibenzyl diisocyanate (2,4'-DBDI) ;
      ▪ 2,4-diisocyanate de toluène (2,4-TDI) ;
- un composé trimère de biurée, notamment un composé trimère de biurée d'un composé choisi parmi :
   ∘ les composés diisocyanates aromatiques symétriques, de préférence :
      ▪ 2,2'-diisocyanate de diphénylméthylène (2,2'-MDI) et 4,4'-diisocyanate de diphénylméthylène (4,4'-MDI) ;
      ▪ 4,4'-dibenzyl diisocyanate (4,4'-DBDI) ;
      ▪ 2,6-diisocyanate de toluène (2,6-TDI) ;
      ▪ m-xylylène diisocyanate (m-XDI) ;
   ∘ les composés diisocyanates alicycliques symétriques, de préférence méthylène bis(4-cyclohexylisocyanate) (H₁₂MDI) ;
   ∘ les composés diisocyanates aliphatiques symétriques, de préférence diisocyanate d'hexaméthylène (HDI) ;
   ∘ les composés diisocyanates aromatiques dissymétriques, de préférence :
      ▪ 2,4'-diisocyanate de diphénylméthylène (2,4'-MDI) ;
      ▪ 2,4'-dibenzyl diisocyanate (2,4'-DBDI) ;
      ▪ 2,4-diisocyanate de toluène (2,4-TDI) ;
- les composés diisocyanates alicycliques dissymétriques, de préférence diisocyanate d'isophorone (IPDI).

Pour le procédé selon l'invention, le composé (B) est préférentiellement choisi parmi triphenylmethane-4,4',4"-triisocyanate, 1,1',1"-methylidynetris (4-isocyanatobenzene), un isocyanurate de HDI, un isocyanurate d'IPDI, un trimère de biurée de HDI et un trimère de biurée d'IPDI.

Outre les composés (A) et (B), le procédé selon l'invention met également en œuvre un composé (C) de formule (I). De manière préférée, le composé (C) est un composé de formule (I) dans laquelle :
- L représente indépendamment un résidu poly(éthylèneglycol) ; ou
- n représente un nombre allant de 50 à 400 ; ou
- L représente indépendamment un résidu poly(éthylèneglycol) et n représente un nombre allant de 50 à 400.

De manière plus préférée, le composé (C) est un composé de formule (I) dans laquelle :
- L représente indépendamment un résidu poly(éthylèneglycol) ; ou
- n représente un nombre allant de 100 à 300 ; ou
- L représente indépendamment un résidu poly(éthylèneglycol) et n représente un nombre allant de 100 à 300.

De manière également préférée pour le procédé selon l'invention, le composé (C) est un composé dont la masse molaire (M_{W}) va de 1 500 à 20 000 g/mol, de préférence de 2 000 à 20 000 g/mol, plus préférentiellement de 4 000 à 15 000 g/mol.

Lors de la réaction de condensation permettant de préparer le composé uréthane selon l'invention, les quantités de composés (A), (B) et (C) peuvent varier. De manière préférée, la quantité molaire de composé (C) est environ deux fois moindre que la quantité molaire de composé monoisocyanate (A).

Outre un composé uréthane et un procédé, l'invention concerne également une composition aqueuse comprenant au moins un composé uréthane selon l'invention.

L'invention concerne également une composition aqueuse comprenant au moins un composé uréthane préparé selon le procédé de l'invention.

La composition aqueuse selon l'invention peut également comprendre au moins un additif, en particulier un additif choisi parmi :
- un composé amphiphile, notamment un composé tensio-actif, de préférence un composé tensio-actif hydroxylé, par exemple alkyl-polyalkyleneglycol, notamment alkyl-polyethyleneglycol et alkyl-polypropyleneglycol ;
- un dérivé de polysaccharide, par exemple cyclodextrine, dérivé de cyclodextrine, polyéthers ;
- solvants, notamment solvants de coalescence, et composés hydrotropes, par exemple glycol, butylglycol, butyldiglycol, monopropyleneglycol, ethyleneglycol, ethylenediglycol, produits Dowanol (numéro CAS 34590-94-8), produits Texanol (numéro CAS 25265-77-4) ;
- agents antimousse, agents biocides.

L'invention fournit également une formulation aqueuse qui peut être utilisée dans de nombreux domaines techniques. La formulation aqueuse selon l'invention comprend au moins une composition selon l'invention et peut comprendre au moins un pigment organique ou minéral ou des particules organiques, organo-métalliques ou minérales, par exemple carbonate de calcium, talc, kaolin, mica, silicates, silice, oxydes métalliques, notamment dioxyde de titane, oxydes de fer.

La formulation aqueuse selon l'invention peut également comprendre au moins un agent choisi parmi un agent espaceur de particules, un agent dispersant, un agent stabilisant stérique, un agent stabilisant électrostatique, un agent opacifiant, un solvant, un agent de coalescence, un agent antimousse, un agent de conservation, un agent biocide, un agent d'étalement, un agent épaississant, un copolymère filmogène et leurs mélanges.

Selon le composé uréthane particulier ou les additifs qu'elle comprend la formulation selon l'invention peut être mise en œuvre dans de nombreux domaines techniques. Ainsi, la formulation selon l'invention peut être une formulation de revêtement. De préférence, la formulation selon l'invention est une formulation d'encre, une formulation d'adhésif, une formulation de vernis, une formulation de peinture, par exemple de peinture décorative ou de peinture industrielle. De préférence, la formulation selon l'invention est une formulation de peinture.

L'invention fournit également une pâte pigmentaire aqueuse concentrée comprenant au moins un composé uréthane selon l'invention et au moins un pigment coloré organique ou minéral.

Le composé uréthane selon l'invention possède des propriétés permettant de l'utiliser pour modifier ou contrôler la rhéologie du milieu le comprenant. Ainsi, l'invention fournit également un procédé de contrôle de la viscosité d'une composition aqueuse.

Ce procédé de contrôle de la viscosité selon l'invention comprend l'addition d'au moins un composé uréthane selon l'invention dans une composition aqueuse. Ce procédé de contrôle de la viscosité peut également comprendre l'addition d'au moins un composé uréthane préparé selon le procédé de l'invention.

De manière préférée, le procédé de contrôle de la viscosité selon l'invention est mis en œuvre au moyen d'une composition aqueuse selon l'invention.

De manière également préférée, le procédé de contrôle de la viscosité selon l'invention est mis en œuvre au moyen d'une formulation aqueuse selon l'invention.

Les exemples qui suivent permettent d'illustrer les différents aspects de l'invention.

### Exemple 1 : préparation de composés uréthanes selon l'invention :

Dans un réacteur en verre de 3 L (récipient 1) équipé d'une agitation mécanique, d'une pompe à vide, d'une entrée d'azote et chauffé au moyen d'une double enveloppe dans laquelle circule de l'huile, on introduit 594,4 g de composé (C) (polyéthylène glycol de masse moléculaire (M_{w}) 10 000 ou PEG 10 000). Ce milieu agité est chauffé à 105°C et placé sous atmosphère inerte.

Parallèlement, dans un ballon tricol en verre de 100 mL (récipient 2), on introduit 39,59 g de composé (A2-2) (IPDI) auxquels on ajoute 1,19 g d'un catalyseur au bismuth (carboxylate de bismuth). On purge le milieu à l'azote puis on le chauffe jusqu'à 50°C. Lorsque cette température est atteinte, on introduit progressivement 23,18 g de composé (A2-1) (octan-1-ol) au moyen d'une seringue.

Après addition complète, le mélange réactionnel est laissé sous agitation pendant 15 minutes. Puis, on vérifie que le taux théorique de fonctions NCO est atteint par un dosage en retour. On prélève 1 g du milieu réactionnel auquel on ajoute un excès de dibutylamine (1 molaire par exemple) qui réagit avec les fonctions isocyanates présentes dans le milieu. La dibutylamine n'ayant pas réagi est ensuite dosée avec de l'acide chlorhydrique (1 N par exemple). On peut alors en déduire la quantité de fonctions isocyanates présentes dans le milieu réactionnel.

On ajoute alors 3,25 g de composé (B) (isocyanurate de HDI) et on laisse sous agitation pendant 5 minutes.

Puis, on coule le contenu du récipient 2, comprenant le mélange de composés monoisocyanate et triisocyanate, dans le récipient 1. On maintient l'agitation pendant 60 minutes à 100 ± 2°C. Puis, on vérifie que le taux de fonction NCO est nul indiquant la fin de la réaction. On laisse refroidir ; on obtient le composé uréthane 1 selon l'invention.

De manière analogue, on prépare les composés uréthanes 2 à 10 selon l'invention. Egalement de manière analogue, on prépare un composé comparatif C1 en omettant l'addition de composé (B).

L'ensemble des réactifs et proportions (% en masse) mis en œuvre sont présentés dans le tableau 1.

**Tableau 1**

| composé uréthane | | 1 | 2 | 3 | 4 | 5 | 6 | 7 | 8 | 9 | 10 | C1 |
|---|---|---|---|---|---|---|---|---|---|---|---|---|
| (A2-1) | octan-1-ol | 3,50 | | 3,51 | 3,51 | | | 3,52 | 1,75 | 4,29 | | 3,09 |
| (A2-1) | octan-2-ol | | | | | 3,51 | | | | | | |
| (A2-1) | Nopol * | | 4,44 | | | | | | | | | |
| (A2-1) | 2-ethyl-hexanol | | | | | | | | 1,75 | | 3,51 | |
| (A2-1) | isononanol | | | | | | 3,87 | | | | | |
| (A2-2) | IPDI | 5,98 | 5,94 | 6,00 | 5,99 | 5,99 | 5,96 | 6,00 | 5,99 | 7,31 | 5,99 | 5,28 |
| (B) | isocyanurate de HDI | 0,49 | 0,32 | | | | 0,49 | | 0,49 | 0,60 | | |
| (B) | biuret de HDI | | | 0,34 | 0,50 | 0,50 | | | | | 0,50 | |
| (B) | isocyanurate de PDI | | | | | | | 0,28 | | | | |
| (C) | PEG 10 000 | 89,85 | 89,12 | 90,09 | 89,94 | 89,94 | 89,5 | 90,14 | 89,96 | | 89,94 | 91,47 |
| (C) | PEG 8 000 | | | | | | | | | 87,74 | | |
| catalyseur au bismuth | | 0,18 | 0,18 | 0,06 | 0,06 | 0,06 | 0,18 | 0,06 | 0,06 | 0,06 | 0,06 | 0,16 |

| | | | | | | | | | | | | |
|---|---|---|---|---|---|---|---|---|---|---|---|---|
| * 6,6-dimethylbicyclo[3.1.1]hept-2-ene-2-ethanol | | | | | | | | | | | | |

### Exemple 2 : préparation et caractérisation de compositions aqueuses de composés uréthane selon l'invention et de compositions aqueuses comparatives :

Dans la solution aqueuse de composé uréthane 1 selon l'invention préparé selon l'exemple 1, on ajoute un alcool gras polyéthoxylé (produit Mergital D8 Cognis) comme agent tensioactif. Puis, on ajoute de l'eau. On obtient une composition aqueuse comprenant environ 20 % en masse d'agent uréthanne hydrophobé modificateur de rhéologie selon l'invention, environ 5 % en masse d'agent tensioactif et environ 75 % d'eau. On ajoute alors environ 1 000 ppm d'un agent biocide (produit Biopol SMV Chemipol) et environ 1 000 ppm d'un agent antimousse (produit Tego 1488 Evonik) afin d'obtenir la composition aqueuse 1 selon l'invention.

De manière analogue, on prépare les compositions aqueuses 2 à 10 selon l'invention à partir des composés uréthanes 2 à 10 selon l'invention. Egalement de manière analogue, on prépare une composition aqueuse comparative comprenant le composé comparatif C1 de l'exemple 1.

L'ensemble des réactifs et proportions (% en masse) mis en œuvre sont présentés dans le tableau 2.

**Tableau 2**

| composé uréthane | | 1 | 2 | 3 | 4 | 5 | 6 | 7 | 8 | 9 | 10 | C1 |
|---|---|---|---|---|---|---|---|---|---|---|---|---|
| (A2-1) | octan-1-ol | 0,71 | | 0,72 | 0,72 | | | 0,72 | 0,36 | 0,87 | | 0,62 |
| (A2-1) | octan-2-ol | | | | | 0,72 | | | | | | |
| (A2-1) | Nopol^{*} | | 0,91 | | | | | | | | | |
| (A2-1) | 2-ethyl-hexanol | | | | | | | | 0,36 | | 0,72 | |
| (A2-1) | isononanol | | | | | | 0,79 | | | | | |
| alcool éthoxylé tensio-actif | | 5,10 | 5,10 | 5,10 | 5,10 | 5,10 | 5,10 | 5,10 | 5,10 | 5,10 | 5,12 | 5,08 |
| (A2-2) | IPDI | 1,22 | 1,21 | 1,22 | 1,22 | 1,22 | 1,22 | 1,22 | 1,22 | 1,49 | 1,22 | 1,07 |
| (B) | isocyanurate de HDI | 0,10 | 0,07 | | | | 0,10 | | 0,10 | 0,12 | | |
| (B) | biuret de HDI | | | 0,07 | 0,10 | 0,10 | | | | | 0,10 | |
| (B) | isocyanurate de PDI | | | | | | | 0,06 | | | | |
| (C) | PEG 10 000 | 18,33 | 18,18 | 18,38 | 18,35 | 18,35 | 18,26 | 18,39 | 18,35 | | 18,35 | 18,69 |
| (C) | PEG 8 000 | | | | | | | | | 17,90 | | |
| catalyseur au bismuth | | 0,04 | 0,04 | 0,01 | 0,01 | 0,01 | 0,04 | 0,01 | 0,01 | 0,01 | 0,01 | 0,04 |
| eau | | 74,50 | 74,50 | 74,50 | 74,50 | 74,53 | 74,50 | 74,51 | 74,50 | 74,50 | 74,48 | 74,50 |

| | | | | | | | | | | | | |
|---|---|---|---|---|---|---|---|---|---|---|---|---|
| * 6,6-dimethylbicyclo[3.1.1]hept-2-ene-2-ethanol | | | | | | | | | | | | |

### Exemple 3 : préparation et caractérisation de formulations de peinture selon l'invention et de formulations de peinture comparatives :

On prépare une formulation de peinture 1 selon l'invention à partir de la composition aqueuse 1 selon l'invention. L'ensemble des ingrédients et proportions (% en masse) mis en œuvre sont présentés dans le tableau 3.

Les formulations de peinture 2 à 10 selon l'invention sont préparées de manière analogue en remplaçant la composition aqueuse de composé uréthane de l'exemple 1 par les compositions aqueuses 2 à 10.

Egalement de manière analogue, on prépare des formulations de peinture comparatives à partir de compositions aqueuses de composés modificateurs de rhéologie connus.

**Tableau 3**

| Ingrédients : | quantité (g) : |
|---|---|
| eau | 99,45 |
| agent dispersant (Coadis BR3 Coatex) | 3,9 |
| agent biocide (Acticide MBS Thor) | 1,3 |
| agent anti-mousse (Airex 901W Evonik) | 1,31 |
| NH₄OH (28 %) | 0,5 |
| pigment TiO₂ (RHD2 Hunstman) | 122,2 |
| pigment CaCO₃ (Omyacoat 850 OG Omya) | 84,5 |
| agent liant (Acronal 290D Basf) | 270,6 |
| monopropylène glycol | 6,5 |
| solvant (Texanol Eastman) | 6,5 |
| agent anti-mousse (Tego 825 Evonik) | 0,65 |
| composition aqueuse 1 selon l'invention | 28,6 |
| complément d'eau | q.s.p. 650 g au total |

Pour chacune des formulations de peinture, on a déterminé, 24 h après leur préparation et à température ambiante :
- la viscosité Brookfield, mesurée à 25°C et à 10 tr/min et à 100 tr/min, µ_{Bk10} et µ_{Bk100} (en mPa.s) ;
- la viscosité Cone Plan ou viscosité ICI, mesurée à haut gradient de vitesse, µ_{I} (en mPa.s) ;
- la viscosité Stormer, mesurée à moyen gradient de vitesse, µ_{S} (en Krebs Units ou KU, au moyen du module standard).

Les propriétés des formulations de peinture sont présentées dans le tableau 4.

**Tableau 4**

| formulation | µ_{Bk10} | µ_{Bk10} | µ_{I} | µ_{S} | µ_{I} / µ_{S} |
|---|---|---|---|---|---|
| comparative | 2 960 | 1 900 | 250 | 100 | 2,5 |
| 1 selon l'invention | 2 800 | 1 587 | 300 | 95 | 3,2 |
| 2 selon l'invention | 3 060 | 1 818 | 310 | 100 | 3,1 |
| 3 selon l'invention | 2 960 | 1 723 | 315 | 98 | 3,2 |
| 4 selon l'invention | 3 080 | 1 793 | 305 | 99 | 3,1 |
| 5 selon l'invention | 4 380 | 2 316 | 315 | 103 | 3,1 |
| 6 selon l'invention | 2 570 | 1 472 | 285 | 94 | 3 |
| 7 selon l'invention | 2 785 | 1 648 | 300 | 97 | 3,1 |
| 8 selon l'invention | 2 850 | 1 685 | 300 | 97 | 3,1 |
| 9 selon l'invention | 3 000 | 1 723 | 290 | 98 | 3 |
| 10 selon l'invention | 2 460 | 1 427 | 270 | 92 | 2,9 |

### Exemple 4 : préparation et caractérisation de compositions aqueuses de composés uréthanes selon l'invention comprenant un latex et compositions aqueuses comparatives comprenant un latex :

Les compositions aqueuses au latex sont préparées en mélangeant à l'aide d'un agitateur muni d'une turbine 366,3 g d'un liant acrylique (Encor 662 ACR Arkema Coating Resins) et alternativement :
- 169,95 g d'eau et 13,75 g d'une composition aqueuse comprenant le composé uréthane 1 selon l'invention pour le test incorporant 0,5 % de la composition aqueuse ;
- 159,64 g d'eau et 24,06 g d'une composition aqueuse comprenant le composé uréthane 1 selon l'invention pour le test incorporant 0,875 % de la composition aqueuse ;
- 149,32 g d'eau et 34,38 g d'une composition aqueuse comprenant le composé uréthane 1 selon l'invention pour le test incorporant 1,25 % de la composition aqueuse ;
- 139,01 g d'eau et 44,69 g d'une composition aqueuse comprenant le composé uréthane 1 selon l'invention pour le test incorporant 1,625 % de la composition aqueuse ;
- 128,7 g d'eau et 55 g d'une composition aqueuse comprenant le composé uréthane 1 selon l'invention pour le test incorporant 2 % de la composition aqueuse.

De manière analogue, on prépare une composition aqueuse de composé uréthanes 2 selon l'invention comprenant également un latex et une composition aqueuse comparative comprenant un composé modificateur de rhéologie connu et un latex.

Pour chacune des compositions, on a déterminé, 24 h après leur préparation et à température ambiante :
- la viscosité Cone Plan ou viscosité ICI, mesurée à haut gradient de vitesse, µ_{I} (en mPa.s) ;
- la viscosité Stormer, mesurée à moyen gradient de vitesse, µ_{S} (en Krebs Units ou KU, au moyen du module standard).

Les quantités de composés modificateurs de rhéologie mises en œuvre et les mesures de viscosités de ces compositions sont présentées dans le tableau 5.

**Tableau 5**

| formulation de peinture | µ_{I} | µ_{S} | µ_{I} / µ_{S} |
|---|---|---|---|
| comparative (produit Coapur 3020 Coatex) | | | |
| à 0,5 % en poids de composé | 5 | 66 | 0,08 |
| à 0,875 % en poids de composé | 48 | 81 | 0,59 |
| à 1,25 % en poids de composé | 91 | 87 | 1,05 |
| à 1,625 % en poids de composé | 155 | 93 | 1,67 |
| à 2 % en poids de composé | 244 | 100 | 2,44 |

| composé uréthane 1 | | | |
|---|---|---|---|
| à 0,5 % en poids de composé uréthane 1 | 20 | 59 | 0,34 |
| à 0,875 % en poids de composé uréthane 1 | 66 | 68 | 0,97 |
| à 1,25 % en poids de composé uréthane 1 | 135 | 77 | 1,75 |
| à 1,625 % en poids de composé uréthane 1 | 218 | 87 | 2,51 |
| à 2 % en poids de composé uréthane 1 | 323 | 95 | 3,40 |

| composé uréthane 2 | | | |
|---|---|---|---|
| à 0,5 % en poids de composé uréthane 2 | 20 | 65 | 0,31 |
| à 0,875 % en poids de composé uréthane 2 | 62 | 74 | 0,84 |
| à 1,25 % en poids de composé uréthane 2 | 116 | 80 | 1,45 |
| à 1,625 % en poids de composé uréthane 2 | 191 | 88 | 2,17 |
| à 2 % en poids de composé uréthane 2 | 274 | 94 | 2,91 |

Par rapport au composé uréthane comparatif, les composés uréthanes selon l'invention permettent de préparer des compositions aqueuses au latex ainsi que des compositions de peinture dont les viscosités sont particulièrement bien contrôlées. Notamment, la viscosité µ_{I} est augmentée ; le rapport µ_{I} / µ_{S} est alors systématiquement supérieur lors de la mise en œuvre des composés uréthanes selon l'invention.

## Revendications

1. Composé uréthane préparé en l'absence de tout composé diisocyanate, par réaction :
(A) d'au moins un composé monoisocyanate choisi parmi :
(A1) un composé comprenant une unique fonction isocyanate et
(A2) au moins un composé monoisocyanate issu de la réaction séparée
(A2-1) d'au moins un composé comprenant au moins un atome d'hydrogène labile et
(A2-2) d'au moins un composé diisocyanate dissymétrique,
(B) d'au moins un composé isocyanate comprenant plus de 2 fonctions isocyanates, et
(C) d'au moins un composé de formule (I) :
(HO)-Lₙ-(OH) (I)
dans laquelle L représente indépendamment un résidu alkylèneglycol et n représente un nombre allant de 40 à 400,
le composé monoisocyanate étant mis à réagir avec le composé alkylène-glycol en présence du composé polyisocyanate.

2. Composé uréthane selon la revendication 1 pour lequel le composé monoisocyanate (A1) est :
• un composé de formule (II) :
R-NCO (II)
dans laquelle R représente un groupement hydrocarboné linéaire, ramifié ou cyclique, saturé, insaturé ou aromatique, de préférence un groupement alkyl linéaire, ramifié ou cyclique comprenant de 6 à 20 atomes de carbone ou un groupement alcényle linéaire, ramifié ou cyclique comprenant de 6 à 20 atomes de carbone ; ou est
• un composé choisi parmi :
∘ les composés monoisocyanates aromatiques, notamment phenyl isocyanate, diphenylmethane monoisocyanate, 2-phenylethyl isocyanate, 4-tolyl isocyanate, 2-tolyl isocyanate, 2,5-dimethylphenyl isocyanate, 3,4-dimethylphenyl isocyanate, 2,3-dimethylphenyl isocyanate, 4-isocyanato-4'-methyldiphenylmethane ;
∘ les composés monoisocyanates aromatiques polyfonctionnels, notamment 2-methoxy-4-nitrophenyl isocyanate, polymethylene polyphenyl isocyanate ;
∘ les composés alkyl-monoisocyanates, notamment hexyl-isocyanate, heptyl-isocyanate, octyl-isocyanate, n-nonyl-isocyanate, decyl-isocyanate, undecyl-isocyanate, dodecyl-isocyanate, tridecyl-isocyanate, tetradecyl-isocyanate, cetyl-isocyanate, 2-ethyl-hexyl-isocyanate, n-octyl-isocyanate, isononyl-isocyanate, stearyl-isocyanate ;
∘ les composés cycloalkyl-monoisocyanates, notamment cyclohexyl-isocyanate, 1-isocyanatomethyl-1,3,3-trimethylcyclohexane.

3. Composé uréthane selon l'une des revendications 1 et 2 pour lequel la réaction de préparation du composé monoisocyanate (A2) est une réaction catalysée, de préférence catalysée au moyen d'acide acétique, d'une amine, de préférence de 1,8-diazabicyclo[5.4.0]undec-7-ene (DBU), ou d'au moins un dérivé d'un métal choisi parmi Al, Bi, Sn, Hg, Pb, Mn, Zn, Zr, Ti, par exemple dilaurate de dibutyl bismuth, diacétate de dibutyl bismuth, oxyde de dibutyl bismuth, carboxylate de bismuth, dilaurate de dibutyl étain, diacétate de dibutyl étain, oxyde de dibutyl étain, un dérivé du mercure, un dérivé du plomb, des sels de zinc, des sels de manganèse, un composé comprenant du zirconium chélaté, un composé comprenant de l'aluminium chélaté.

4. Composé uréthane selon l'une des revendications 1 à 3
- pour lequel le composé (A2-1) est choisi parmi un composé comprenant au moins un atome d'hydrogène labile et réactif avec le composé diisocyanate dissymétrique ; un composé comprenant au moins un groupement hydroxyle ; un composé comprenant une fonction amine primaire ou une fonction amine secondaire ; un acide carboxylique ; un composé mercaptan ; de préférence un composé comprenant un groupement hydroxyle, notamment un monoalcool, par exemple un monoalcool linéaire, ramifié ou cyclique en C₅-C₁₄, en particulier un monoalcool linéaire, ramifié ou cyclique en C₆-C₁₄, notamment un monoalcool linéaire, ramifié ou cyclique en C₈-C₁₂ ; ou
- pour lequel le composé (A2-2) est choisi parmi :
• les composés diisocyanates aromatiques dissymétriques, de préférence 2,4'-diisocyanate de diphénylméthylène (2,4'-MDI), 2,4'-dibenzyl diisocyanate (2,4'-DBDI), 2,4-diisocyanate de toluène (2,4-TDI) ;
• les composés diisocyanates alicycliques dissymétriques, de préférence diisocyanate d'isophorone (IPDI).

5. Composé uréthane selon l'une des revendications 1 à 4 pour lequel :
• le composé (B) est un composé isocyanate comprenant 3, 4, 5 ou 6 fonctions isocyanates ; ou pour lequel
• le composé (B) est un composé isocyanate comprenant plus de 2,5 fonctions isocyanates, de préférence plus de 2,6 fonctions isocyanates, plus préférentiellement plus de 2,7 fonctions isocyanates, encore plus préférentiellement 3 ou plus de 3 fonctions isocyanates ; ou pour lequel
• le composé (B) est le triphenylmethane-4,4',4"-triisocyanate ou 1,1', 1"-methylidynetris (4-isocyanatobenzene) ; ou pour lequel
• le composé (B) est un composé isocyanurate, notamment un composé isocyanurate d'un composé choisi parmi :
∘ les composés diisocyanates aromatiques symétriques, de préférence :
▪ 2,2'-diisocyanate de diphénylméthylène (2,2'-MDI) et 4,4'-diisocyanate de diphénylméthylène (4,4'-MDI) ;
▪ 4,4'-dibenzyl diisocyanate (4,4'-DBDI) ;
▪ 2,6-diisocyanate de toluène (2,6-TDI) ;
▪ m-xylylène diisocyanate (m-XDI) ;
∘les composés diisocyanates alicycliques symétriques, de préférence méthylène bis(4-cyclohexylisocyanate) (H₁₂MDI) ;
∘ les composés diisocyanates aliphatiques symétriques, de préférence diisocyanate d'hexaméthylène (HDI), diisocyanate de pentaméthylène (PDI) ;
∘ les composés diisocyanates aromatiques dissymétriques, de préférence :
▪ 2,4'-diisocyanate de diphénylméthylène (2,4'-MDI) ;
▪ 2,4'-dibenzyl diisocyanate (2,4'-DBDI) ;
▪ 2,4-diisocyanate de toluène (2,4-TDI) ;
• le composé (B) est un composé trimère de biurée, notamment un composé trimère de biurée d'un composé choisi parmi :
∘ les composés diisocyanates aromatiques symétriques, de préférence :
▪ 2,2'-diisocyanate de diphénylméthylène (2,2'-MDI) et 4,4'-diisocyanate de diphénylméthylène (4,4'-MDI) ;
▪ 4,4'-dibenzyl diisocyanate (4,4'-DBDI) ;
▪ 2,6-diisocyanate de toluène (2,6-TDI) ;
▪ m-xylylène diisocyanate (m-XDI) ;
∘ les composés diisocyanates alicycliques symétriques, de préférence méthylène bis(4-cyclohexylisocyanate) (H₁₂MDI) ;
∘ les composés diisocyanates aliphatiques symétriques, de préférence diisocyanate d'hexaméthylène (HDI), diisocyanate de pentaméthylène (PDI) ;
o les composés diisocyanates aromatiques dissymétriques, de préférence :
▪ 2,4'-diisocyanate de diphénylméthylène (2,4'-MDI) ;
▪ 2,4'-dibenzyl diisocyanate (2,4'-DBDI) ;
▪ 2,4-diisocyanate de toluène (2,4-TDI) ;
• les composés diisocyanates alicycliques dissymétriques, de préférence diisocyanate d'isophorone (IPDI).

6. Composé uréthane selon l'une des revendications 1 à 5 pour lequel le composé (C) est un composé de formule (I) dans laquelle :
• L représente indépendamment un résidu éthylèneglycol ; ou
• n représente un nombre allant de 50 à 400, de préférence de 100 à 300 ; ou
• L représente indépendamment un résidu éthylèneglycol et n représente un nombre allant de 50 à 400, de préférence de 100 à 300.

7. Composé uréthane selon l'une des revendications 1 à 6 pour lequel le composé de formule (I) a une masse molaire (M_{W}) allant de 1 500 à 20 000 g/mol, de préférence de 2 000 à 20 000 g/mol, plus préférentiellement de 4 000 à 15 000 g/mol, déterminée comme indiqué dans la description.

8. Composé uréthane selon l'une des revendications 1 à 7 pour lequel la quantité molaire de composé (C) est environ deux fois moindre que la quantité molaire de composé monoisocyanate (A).

9. Procédé de préparation d'un composé uréthane en l'absence de tout composé diisocyanate, par réaction :
(A) d'au moins un composé monoisocyanate choisi parmi :
(A1) un composé comprenant une unique fonction isocyanate et
(A2) au moins un composé monoisocyanate issu de la réaction séparée
(A2-1) d'au moins un composé comprenant au moins un atome d'hydrogène labile et
(A2-2) d'au moins un composé diisocyanate dissymétrique,
(B) d'au moins un composé isocyanate comprenant plus de 2 fonctions isocyanates, et
(C) d'au moins un composé de formule (I) :
(HO)-Lₙ-(OH) (I)
dans laquelle L représente indépendamment un résidu alkylèneglycol et n représente un nombre allant de 40 à 400,
le composé monoisocyanate étant mis à réagir avec le composé alkylène-glycol en présence du composé polyisocyanate.

10. Procédé selon la revendication 9 pour la préparation d'un composé uréthane selon l'une des revendications 1 à 8.

11. Composition aqueuse comprenant :
• au moins un composé choisi parmi un composé uréthane selon l'une des revendications 1 à 8 et un composé uréthane préparé selon le procédé des revendications 9 ou 10, et éventuellement
• au moins un additif choisi parmi :
∘un composé amphiphile, notamment un composé tensio-actif, de préférence un composé tensio-actif dihydroxylé, par exemple alkyl-polyalkyleneglycol, notamment alkyl-polyethyleneglycol et alkyl-polypropyleneglycol ;
∘un dérivé de polysaccharide, par exemple cyclodextrine, dérivé de cyclodextrine, polyéthers ;
∘solvants, notamment solvants de coalescence, et composés hydrotropes, par exemple glycol, butylglycol, butyldiglycol, monopropyleneglycol, ethyleneglycol, ethylenediglycol, produits dont le numéro CAS est 34590-94-8), produits dont le numéro CAS est 25265-77-4) ;
o agents antimousse, agents biocides.

12. Formulation aqueuse comprenant :
• au moins une composition selon la revendication 11 ; éventuellement
• au moins un pigment organique ou minéral ou des particules organiques, organo-métalliques ou minérales, par exemple carbonate de calcium, talc, kaolin, mica, silicates, silice, oxydes métalliques, notamment dioxyde de titane, oxydes de fer ; et éventuellement
• au moins un agent choisi parmi un agent espaceur de particules, un agent dispersant, un agent stabilisant stérique, un agent stabilisant électrostatique, un agent opacifiant, un solvant, un agent de coalescence, un agent antimousse, un agent de conservation, un agent biocide, un agent d'étalement, un agent épaississant, un copolymère filmogène et leurs mélanges.

13. Formulation la revendication 12 de revêtement, notamment une formulation d'encre, une formulation de vernis, une formulation d'adhésif, une formulation de peinture, par exemple de peinture décorative ou de peinture industrielle.

14. Pâte pigmentaire aqueuse concentrée comprenant au moins un composé uréthane selon l'une des revendications 1 à 8 ou au moins un composé uréthane préparé selon le procédé des revendications 9 ou 10 et au moins un pigment organique ou minéral coloré.

15. Procédé de contrôle de la viscosité d'une composition aqueuse comprenant l'addition d'au moins un composé uréthane selon l'une des revendications 1 à 8 ou d'au moins un composé uréthane préparé selon le procédé des revendications 9 ou 10 ; de préférence procédé de contrôle de la viscosité pour lequel la composition aqueuse est une composition selon la revendication 11 ou bien une formulation définie selon l'une des revendications 12 et 13.

## Patentansprüche

1. Urethanverbindung, die in Abwesenheit von Diisocyanat-Verbindungen hergestellt wird, mittels Reaktion von:
(A) mindestens einer Monoisocyanat-Verbindung, ausgewählt aus:
(A1) einer Verbindung mit einer einzigen Isocyanat-Funktion und
(A2) mindestens einer Monoisocyanat-Verbindung aus der separaten Reaktion von
(A2-1) mindestens einer Verbindung mit mindestens einem instabilen Wasserstoffatom und
(A2-2) mindestens einer asymmetrischen Diisocyanat-Verbindung,
(B) mindestens einer Isocyanat-Verbindung mit mehr als 2 Isocyanat-Funktionen, und
(C) mindestens einer Verbindung mit der Formel (I):
(HO)-Lₙ-(OH) (I)
wobei L unabhängig einen Alkylenglykol-Rest darstellt und n eine Zahl von 40 bis 400 ist,
wobei die Monoisocyanatverbindung mit der Alkylenglykolverbindung in Gegenwart der Polyisocyanatverbindung umgesetzt wird.

2. Urethanverbindung nach Anspruch 1, wobei die Monoisocyanat-Verbindung (A1) definiert ist als:
• eine Verbindung mit der Formel (II):
R-NCO (II)
wobei R eine lineare, verzweigte oder zyklische, gesättigte, ungesättigte oder aromatische Kohlenwasserstoffgruppe darstellt, vorzugsweise eine lineare, verzweigte oder zyklische Alkylgruppe, die 6 bis 20 Kohlenstoffatomen umfasst, oder eine lineare, verzweigte oder zyklische Alkenylgruppe, die 6 bis 20 Kohlenstoffatomen umfasst, oder eine
• Verbindung ist, ausgewählt aus:
∘ aromatischen Monoisocyanat-Verbindungen, insbesondere Phenylisocyanat, Diphenylmethanmonoisocyanat, 2-Phenylethylisocyanat, 4-Tolylisocyanat, 2-Tolylisocyanat, 2,5-Dimethylphenylisocyanat, 3,4-Dimethylphenylisocyanat, 2,3-Dimethylphenylisocyanat, 4-Isocyanato-4'-methyldiphenylmethan;
∘ polyfunktionellen aromatischen Monoisocyanat-Verbindungen, insbesondere 2-Methoxy-4-nitrophenylisocyanat, Polymethylpolyphenylisocyanat;
∘ die Alkylmonoisocyanat-Verbindungen, insbesondere Hexylisocyanat, Heptylisocyanat, Octylisocyanat, n-Nonylisocyanat, Decylisocyanat, Undecylisocyanat, Dodecylisocyanat, Tridecylisocyanat, Tetradecylisocyanat, Cetylisocyanat, 2-Ethylhexylisocyanat, n-Octylisocyanat, Isononylisocyanat und Stearylisocyanat;
∘Cycloalkylmonoisocyanate-Verbindungen, insbesondere Cyclohexylisocyanat,1-Isocyanatomethyl-1,3,3-trimethylcyclohexan.

3. Urethanverbindung nach einem der Ansprüche 1 und 2, bei der die Reaktion zur Herstellung der Monoisocyanatverbindung (A2) eine katalysierte Reaktion ist, vorzugsweise katalysiert durch Essigsäure, durch ein Amin, vorzugsweise 1,8-Diazabicyclo[5.4.0]undec-7-en (DBU), oder mindestens ein Derivat eines Metalls, ausgewählt aus Al, Bi, Sn, Hg, Pb, Mn, Zn, Zr, Ti, beispielsweise Dibutylbismutdilaurat, Dibutylbismutdiacetat, Dibutylbismutoxid, Bismutcarboxylat, Dibutylzinndilaurat, Dibutylzinndiacetat, Dibutylzinnoxid, einem Quecksilberderivat, einem Bleiderivat, Zinksalzen, Mangansalzen, einer Verbindung mit chelatiertem Zirkonium oder einer Verbindung mit chelatiertem Aluminium.

4. Urethanverbindung nach einem der Ansprüche 1 bis 3
- wobei die Verbindung (A2-1) ausgewählt ist aus einer Verbindung mit mindestens einem instabilen Wasserstoffatom, das mit der asymmetrischen Diisocyanatverbindung reaktiv ist; einer Verbindung mit mindestens einer Hydroxylgruppe; einer Verbindung mit einer primären oder sekundären Aminfunktion; einer Carbonsäure; einer Mercaptanverbindung; vorzugsweise einer Verbindung mit einer Hydroxylgruppe, insbesondere einem Monoalkohol, beispielsweise einem linearen, verzweigten oder zyklischen Monoalkohol mit C₅-C₁₄, insbesondere einem linearen, verzweigten oder zyklischen Monoalkohol mit C₆-C₁₄, insbesondere einem linearen, verzweigten oder zyklischen Monoalkohol mit C₈-C₁₂; oder
- bei der die Verbindung (A2-2) ausgewählt ist aus:
• den asymmetrischen aromatischen Diisocyanatverbindungen, vorzugsweise 2,4'-Diphenylmethylendiisocyanat (2,4'-MDI), 2,4'-Dibenzyldiisocyanat (2,4'-DBDI), 2,4-Toluoldiisocyanat (2,4-TDI);
• den asymmetrischen alicyclischen Diisocyanat-Verbindungen, vorzugsweise Isophorondiisocyanat (IPDI).

5. Urethanverbindung nach einem der Ansprüche 1 bis 4, wobei:
• die Verbindung (B) eine Isocyanat-Verbindung mit 3, 4, 5 oder 6 Isocyanat-Funktionen ist; oder wobei
• die Verbindung (B) eine Isocyanat-Verbindung mit mehr als 2,5 Isocyanat-Funktionen, vorzugsweise mit mehr als 2,6 Isocyanat-Funktionen, noch mehr bevorzugt mit mehr als 2,7 Isocyanat-Funktionen, noch mehr bevorzugt mit 3 oder mehr als 3 Isocyanat-Funktionen ist; oder wobei
• die Verbindung (B) Triphenylmethan-4,4',4"-triisocyanat oder1,1', 1"-Methylidynetris-(4-isocyanatobenzol) ist; oder wobei
• die Verbindung (B) eine Isocyanurat-Verbindung ist, insbesondere eine Isocyanurat-Verbindung einer Verbindung, die ausgewählt ist aus:
∘ den symmetrischen aromatischen Diisocyanat-Verbindungen, vorzugsweise:
▪ 2,2'-Diphenylmethylendiisocyanat (2,2'-MDI) und 4,4'-Diphenylmethylendiisocyanat (4,4'-MDI);
▪ 4,4'-Dibenzyldiisocyanat (4,4'-DBDI);
▪ 2,6-Toluoldiisocyanat (2,6-TDI);
▪ m-Xylylendiisocyanat (m-XDI);
∘den symmetrischen alicyclischen Diisocyanat-Verbindungen, vorzugsweise Methylen-bis(4-cyclohexylisocyanat) (H₁₂MDI);
∘ den symmetrischen aliphatischen Diisocyanat-Verbindungen, vorzugsweise Hexamethylendiisocyanat (HDI), Pentamethylendiisocyanat (PDI);
o den asymmetrischen aromatischen Diisocyanat-Verbindungen, vorzugsweise:
▪ 2,4'-Diphenylmethylendiisocyanat (2,4'-MDI);
▪ 2,4'-Dibenzyldiisocyanat (2,4'-DBDI);
▪ 2,4-Toluoldiisocyanat (2,4-TDI);
• die Verbindung (B) eine Biurettrimer-Verbindung ist, insbesondere eine Biurettrimer-Verbindung einer Verbindung, die ausgewählt ist aus:
∘ den symmetrischen aromatischen Diisocyanat-Verbindungen, vorzugsweise:
▪ 2,2'-Diphenylmethylendiisocyanat (2,2'-MDI) und 4,4'-Diphenylmethylendiisocyanat (4,4'-MDI);
▪ 4,4'-Dibenzyldiisocyanat (4,4'-DBDI);
▪ 2,6-Toluoldiisocyanat (2,6-TDI);
▪ m-Xylylendiisocyanat (m-XDI);
∘ den symmetrischen alicyclischen Diisocyanat-Verbindungen, vorzugsweise Methylen-bis(4-cyclohexylisocyanat) (H₁₂MDI);
∘ den symmetrischen aliphatischen Diisocyanat-Verbindungen, vorzugsweise Hexamethylendiisocyanat (HDI), Pentamethylendiisocyanat (PDI);
∘den asymmetrischen aromatischen Diisocyanat-Verbindungen, vorzugsweise:
▪ 2,4'-Diphenylmethylendiisocyanat (2,4'-MDI);
▪ 2,4'-Dibenzyldiisocyanat (2,4'-DBDI);
▪ 2,4-Toluoldiisocyanat (2,4-TDI);
• den asymmetrischen alicyclischen Diisocyanat-Verbindungen, vorzugsweise Isophorondiisocyanat (IPDI).

6. Urethanverbindung nach einem der Ansprüche 1 bis 5, wobei die Verbindung (C) eine Verbindung der Formel (I) ist, in der:
• L unabhängig einen Ethylenglycol-Rest darstellt; oder
• n eine Zahl zwischen 50 und 400, vorzugsweise zwischen 100 und 300 darstellt, oder wobei
• L unabhängig einen Ethylenglycol-Rest und n eine Zahl zwischen 50 und 400 darstellt, vorzugsweise zwischen 100 und 300, ist.

7. Urethanverbindung nach einem der Ansprüche 1 bis 6, wobei die Verbindung der Formel (I) eine molare Masse (M_{W}) von 1.500 bis 20.000 g/mol, vorzugsweise von 2.000 bis 20.000 g/mol, noch bevorzugter von 4.000 bis 15.000 g/mol aufweist, bestimmt wie in der Beschreibung angegeben.

8. Urethanverbindung nach einem der Ansprüche 1 bis 7, wobei die molare Menge der Verbindung (C) etwa halb so groß ist wie die molare Menge der Monoisocyanatverbindung (A).

9. Verfahren zur Herstellung einer Urethanverbindung in Abwesenheit jeglicher Diisocyanatverbindung durch Reaktion:
(A) mindestens einer Monoisocyanat-Verbindung, ausgewählt aus:
(A1) einer Verbindung mit einer einzigen Isocyanat-Funktion und
(A2) mindestens einer Monoisocyanat-Verbindung aus der separaten Reaktion von
(A2-1) mindestens einer Verbindung mit mindestens einem instabilen Wasserstoffatom und
(A2-2) mindestens einer asymmetrischen Diisocyanat-Verbindung,
(B) mindestens einer Isocyanat-Verbindung mit mehr als 2 Isocyanat-Funktionen, und
(C) mindestens einer Verbindung mit der Formel (I):
(HO)-Lₙ-(OH) (I)
wobei L unabhängig einen Alkylenglykol-Rest darstellt und n eine Zahl zwischen 40 und 400 ist,
wobei die Monoisocyanatverbindung mit der Alkylenglykolverbindung in Gegenwart der Polyisocyanatverbindung umgesetzt wird.

10. Verfahren nach Anspruch 9 zur Herstellung einer Urethanverbindung nach einem der Ansprüche 1 bis 8.

11. Wässrige Zusammensetzung, umfassend:
• mindestens eine Verbindung, ausgewählt aus einer Urethanverbindung nach einem der Ansprüche 1 bis 8 und einer Urethanverbindung, hergestellt nach dem Verfahren der Ansprüche 9 oder 10, und gegebenenfalls
• mindestens ein Additiv, ausgewählt aus:
∘ einer amphiphilen Verbindung, insbesondere einer Tensidverbindung, vorzugsweise einer dihydroxylierte Tensidverbindung, zum Beispiel Alkylpolyalkylenglykol, insbesondere Alkylpolyethylenglykol und Alkylpolypropylenglykol;
∘ einem Polysaccharid-Derivat, zum Beispiel Cyclodextrin, Cyclodextrinderivat, Polyether;
∘ Lösungsmittel, insbesondere Koaleszenzlösungsmittel, und hydrotrope Verbindungen, zum Beispiel Glykol, Butylglykol, Butyldiglykol, Monopropylenglykol, Ethylenglykol, Ethylendiglykol, Produkte mit der CAS-Nummer 34590-94-8 und Produkte mit der CAS-Nummer 25265-77-4;
∘Entschäumungsmittel, Biozidmittel.

12. Wässrige Formulierung, umfassend:
• mindestens eine Zusammensetzung nach Anspruch 11; gegebenenfalls
• mindestens ein organisches oder mineralisches Pigment oder organische, organisch-metallische oder mineralische Partikel, zum Beispiel Calciumcarbonat, Talkum, Kaolin, Glimmer, Silikate, Kieselsäure, Metalloxide, insbesondere Titandioxid, Eisenoxide; und gegebenenfalls
• mindestens ein Mittel, ausgewählt aus einem Partikelabstandshalter, einem Dispergiermittel, einem sterischen Stabilisator, einem elektrostatischen Stabilisator, einem Opazitätsmittel, einem Lösungsmittel, einem Koaleszenzmittel, einem Entschäumungsmittel, einem Konservierungsmittel, einem Biozid, einem Verlaufsmittel, einem Verdickungsmittel, einem filmbildenden Copolymer oder Mischungen davon.

13. Formulierung nach Anspruch 12 zur Beschichtung, insbesondere eine Tintenformulierung, eine Lackformulierung, eine Klebstoffformulierung, eine Farbformulierung, beispielsweise eine dekorative oder industrielle Farbe.

14. Wässrige, konzentrierte Pigmentpaste, umfassend mindestens eine Urethanverbindung nach einem der Ansprüche 1 bis 8 oder mindestens eine Urethanverbindung, hergestellt nach dem Verfahren der Ansprüche 9 oder 10, und mindestens ein farbiges organisches oder mineralisches Pigment.

15. Verfahren zur Kontrolle der Viskosität einer wässrigen Zusammensetzung durch Zugabe mindestens einer Urethanverbindung nach einem der Ansprüche 1 bis 8 oder mindestens einer Urethanverbindung, hergestellt nach dem Verfahren der Ansprüche 9 oder 10; vorzugsweise ein Verfahren zur Kontrolle der Viskosität, bei dem die wässrige Zusammensetzung eine Zusammensetzung nach Anspruch 11 oder eine nach einem der Ansprüche 12 und 13 definierte Formulierung ist.

## Claims

1. A urethane compound prepared in the absence of any diisocyanate compound, by reaction:
(A) of at least one monoisocyanate compound chosen among:
(A1) a compound comprising a single isocyanate function and
(A2) at least one monoisocyanate compound resulting from the separate reaction
(A2-1) of at least one compound comprising at least one labile hydrogen atom and
(A2-2) of at least one dissymmetric diisocyanate compound,
(B) of at least one isocyanate compound comprising more than 2 isocyanate functions, and
(C) of at least one compound of formula (I):
(HO)-Lₙ-(OH) (I)
in which L independently represents an alkylene glycol residue and n represents a number ranging from 40 to 400,
the monoisocyanate compound being reacted with the alkylene glycol compound in the presence of the polyisocyanate compound.

2. The urethane compound according to claim 1, for which the monoisocyanate compound (A1) is:
• a compound of formula (II):
R-NCO (II)
in which R represents a linear, branched or cyclic, saturated, unsaturated or aromatic hydrocarbon group, preferably a linear, branched or cyclic alkyl group comprising from 6 to 20 carbon atoms or a linear, branched or cyclic alkenyl group comprising from 6 to 20 carbon atoms; or is
• a compound chosen among:
∘ aromatic monoisocyanate compounds, in particular phenyl isocyanate, diphenylmethane monoisocyanate, 2-phenylethyl isocyanate, 4-tolyl isocyanate, 2-tolyl isocyanate, 2,5-dimethylphenyl isocyanate, 3,4-dimethylphenyl isocyanate, 2,3-dimethylphenyl isocyanate, 4-isocyanato-4'-methyldiphenylmethane;
∘ polyfunctional aromatic monoisocyanate compounds, in particular 2-methoxy-4-nitrophenyl isocyanate, polymethylene polyphenyl isocyanate;
∘ alkyl monoisocyanate compounds, in particular hexyl isocyanate, heptyl isocyanate, octyl isocyanate, n-nonyl isocyanate, decyl isocyanate, undecyl isocyanate, dodecyl isocyanate, tridecyl isocyanate, tetradecyl isocyanate, cetyl isocyanate, 2-ethylhexyl isocyanate, n-octyl isocyanate, isononyl isocyanate, stearyl isocyanate;
∘ cycloalkyl monoisocyanate compounds, in particular cyclohexyl isocyanate, 1-isocyanatomethyl-1,3,3-trimethylcyclohexane.

3. The urethane compound according to one of claims 1 and 2, for which the reaction for preparing the monoisocyanate compound (A2) is a catalysed reaction, preferably catalysed by means of acetic acid, of an amine, preferably 1,8-diazabicyclo[5.4.0]undec-7-ene (DBU), or of at least one derivative of a metal chosen among Al, Bi, Sn, Hg, Pb, Mn, Zn, Zr, Ti, for example dibutylbismuth dilaurate, dibutylbismuth diacetate, dibutylbismuth oxide, bismuth carboxylate, dibutyltin dilaurate, dibutyltin diacetate, dibutyltin oxide, a mercury derivative, a lead derivative, zinc salts, manganese salts, a compound comprising zirconium chelate, a compound comprising aluminium chelate.

4. The urethane compound according to one of claims 1 to 3
- for which the compound (A2-1) is chosen among a compound comprising at least one labile hydrogen atom that is reactive with the disymmetric diisocyanate compound; a compound comprising at least one hydroxyl group; a compound comprising a primary amine function or a secondary amine function; a carboxylic acid; a mercaptan compound; preferably a compound comprising a hydroxyl group, in particular a monoalcohol, for example a C₅-C₁₄ linear, branched or cyclic monoalcohol, in particular a C₆-C₁₄ linear, branched or cyclic monoalcohol, especially a C₈-C₁₂ linear, branched or cyclic monoalcohol; or
- for which the compound (A2-2) is chosen among:
• dissymmetric aromatic diisocyanate compounds, preferably 2,4'-methylenediphenyl diisocyanate (2,4'-MDI), 2,4'-dibenzyl diisocyanate (2,4'-DBDI), 2,4-toluene diisocyanate (2,4-TDI);
• dissymmetric alicyclic diisocyanate compounds, preferably isophorone diisocyanate (IPDI).

5. The urethane compound according to one of claims 1 to 4, for which:
• the compound (B) is an isocyanate compound comprising 3, 4, 5 or 6 isocyanate functions; or for which
• the compound (B) is an isocyanate compound comprising more than 2.5 isocyanate functions, preferably more than 2.6 isocyanate functions, more preferentially more than 2.7 isocyanate functions, even more preferentially 3 or more than 3 isocyanate functions; or for which
• the compound (B) is triphenylmethane-4,4',4"-triisocyanate or 1,1', 1"-methylidynetris(4-isocyanatobenzene); or for which
• the compound (B) is an isocyanurate compound, in particular an isocyanurate compound of a compound chosen among:
∘ symmetric aromatic diisocyanate compounds, preferably:
▪ 2,2'-methylenediphenyl diisocyanate (2,2'-MDI) and 4,4'-methylenediphenyl diisocyanate (4,4'-MDI);
▪ 4,4'-dibenzyl diisocyanate (4,4'-DBDI);
▪ 2,6-toluene diisocyanate (2,6-TDI);
▪ m-xylylene diisocyanate (m-XDI);
∘ symmetric alicyclic diisocyanate compounds, preferably methylene bis(4-cyclohexylisocyanate) (H₁₂MDI);
∘ symmetric aliphatic diisocyanate compounds, preferably hexamethylene diisocyanate (HDI), pentamethylene diisocyanate (PDI);
∘ dissymmetric aromatic diisocyanate compounds, preferably:
▪ 2,4'-methylenediphenyl diisocyanate (2,4'-MDI);
▪ 2,4'-dibenzyl diisocyanate (2,4'-DBDI);
▪ 2,4-toluene diisocyanate (2,4-TDI);
• the compound (B) is a trimer compound of biuret, in particular a trimer compound of biuret of a compound chosen among:
∘ symmetric aromatic diisocyanate compounds, preferably:
▪ 2,2'-methylenediphenyl diisocyanate (2,2'-MDI) and 4,4'-methylenediphenyl diisocyanate (4,4'-MDI);
▪ 4,4'-dibenzyl diisocyanate (4,4'-DBDI);
▪ 2,6-toluene diisocyanate (2,6-TDI);
▪ m-xylylene diisocyanate (m-XDI);
o symmetric alicyclic diisocyanate compounds, preferably methylene bis(4-cyclohexylisocyanate) (H₁₂MDI);
o symmetric aliphatic diisocyanate compounds, preferably hexamethylene diisocyanate (HDI), pentamethylene diisocyanate (PDI);
o dissymmetric aromatic diisocyanate compounds, preferably:
▪ 2,4'-methylenediphenyl diisocyanate (2,4'-MDI);
▪ 2,4'-dibenzyl diisocyanate (2,4'-DBDI);
▪ 2,4-toluene diisocyanate (2,4-TDI);
• dissymmetric alicyclic diisocyanate compounds, preferably isophorone diisocyanate (IPDI).

6. The urethane compound according to one of claims 1 to 5, for which the compound (C) is a compound of formula (I) in which:
• L independently represents an ethylene glycol residue; or
• n represents a number ranging from 50 to 400, preferably from 100 to 300; or
• L independently represents an ethylene glycol residue and n represents a number ranging from 50 to 400, preferably from 100 to 300.

7. The urethane compound according to one of claims 1 to 6, for which the compound of formula (I) has a molar mass (M_{W}) ranging from 1,500 to 20,000 g/mol, preferably from 2,000 to 20,000 g/mol, more preferentially from 4,000 to 15,000 g/mol, determined as indicated in the description.

8. The urethane compound according to one of claims 1 to 7, for which the molar amount of compound (C) is around two times lower than the molar amount of monoisocyanate compound (A).

9. A method for preparing a urethane compound in the absence of any diisocyanate compound, by reaction:
(A) of at least one monoisocyanate compound chosen among:
(A1) a compound comprising a single isocyanate function and
(A2) at least one monoisocyanate compound resulting from the separate reaction
(A2-1) of at least one compound comprising at least one labile hydrogen atom and
(A2-2) of at least one dissymmetric diisocyanate compound,
(B) of at least one isocyanate compound comprising more than 2 isocyanate functions, and
(C) of at least one compound of formula (I):
(HO)-Lₙ-(OH) (I)
in which L independently represents an alkylene glycol residue and n represents a number ranging from 40 to 400,
the monoisocyanate compound being reacted with the alkylene glycol compound in the presence of the polyisocyanate compound.

10. The method according to claim 9 for preparing a urethane compound according to one of claims 1 to 8.

11. An aqueous composition comprising:
• at least one compound chosen among a urethane compound according to one of claims 1 to 8 and a urethane compound prepared according to the method of claims 9 or 10, and optionally
• at least one additive chosen among:
∘ an amphiphilic compound, in particular a surfactant compound, preferably a dihydroxylated surfactant compound, for example alkyl-polyalkylene glycol, in particular alkyl-polyethylene glycol and alkyl-polypropylene glycol;
∘ a polysaccharide derivative, for example cyclodextrin, cyclodextrin derivatives, polyethers;
∘ solvents, in particular coalescing solvents, and hydrotropic compounds, for example glycol, butylglycol, butyldiglycol, monopropylene glycol, ethylene glycol, ethylene diglycol, products whose CAS number is 34590-94-8, products whose CAS number is 25265-77-4;
o anti-foaming agents, biocides.

12. An aqueous formulation comprising:
• at least one composition according to claim 11; optionally
• at least one organic or mineral pigment or organic, organometallic or mineral particles, for example calcium carbonate, talc, kaolin, mica, silicates, silica, metal oxides, in particular titanium dioxide, iron oxides; and optionally
• at least one agent chosen among a particle spacing agent, a dispersing agent, a steric stabilising agent, an electrostatic stabilising agent, an opacifier, a solvent, a coalescent agent, an anti-foaming agent, a preservative, a biocide, a spreading agent, a thickening agent, a film-forming copolymer and mixtures thereof.

13. The coating formulation claim 12, in particular an ink formulation, a varnish formulation, an adhesive formulation, a paint formulation, for example a decorative paint or industrial paint formulation.

14. A concentrated aqueous pigment paste comprising at least one urethane compound according to one of claims 1 to 8 or at least one urethane compound prepared according to the method of claims 9 or 10 and at least one coloured organic or mineral pigment.

15. A method for controlling the viscosity of an aqueous composition comprising the addition of at least one urethane compound according to one of claims 1 to 8 or of at least one urethane compound prepared according to the method of claims 9 or 10; preferably method for controlling the viscosity for which the aqueous composition is a composition according to claim **11** or else a formulation defined according to one of claims 12 and 13.
